# EUROPEAN PATENT APPLICATION

(11) **EP 2 431 976 A1**
(43) Date of publication of application: **21.03.2012**
(21) Application number: 09844649.5
(22) Date of filing: 24.07.2009
(51) Int. Cl.: G21C 9/016

(54) **MELT-COOLING PROMOTING APPARATUS, AND REACTOR CONTAINER**

(30) Priority: 13.05.2009 JP 2009116770
(71) Applicant: Mitsubishi Heavy Industries, Ltd., Tokyo 108-8215 (JP)
(72) Inventor: GODA, Hiroshi, Tokyo 108-8215 (JP); YAMAGISHI, Makoto, Tokyo 108-8215 (JP); SUZUTA, Tadahiko, Hyogo-Ken 676-8686 (JP); KONDO, Yoshiyuki, Hyogo-Ken 676-8686 (JP)
(74) Representative: Intès, Didier Gérard André
(86) International application number: PCT/JP2009/063263
(87) International publication number: WO 2010/131379

(57) **Abstract**

In a corium cooling promoting apparatus and a containment, a pressurized water reactor (12) is contained inside the containment (11), and a cavity (56) to which cooling water can be supplied in an emergency is provided below the pressurized water reactor (12). The cooling promoting apparatus, (61) is disposed in the cavity (56), and an inclined plate (62) for spreading a corium (debris) from the pressurized water reactor (12) is provided, as the cooling promoting apparatus (61), at a position below the pressurized water reactor (12) in the cavity (56). The cooling of the corium fatting from the nuclear reactor is thereby facilitated, and the corium is cooled at an early stage to improve safety.

## Description

### Field

The present invention relates to a corium cooling promoting apparatus for promoting cooling of a corium falling from a reactor core at an early when a severe accident occurs in a nuclear power plant and to a containment provided with the corium cooling promoting apparatus.

### Background

A pressurized water reactor (PWR) is one type of a nuclear power plant. In the pressurized water reactor, light water is used as a reactor coolant and a neutron moderator and circulates as high-temperature and high-pressure water that does not boil throughout an entire primary system. The high-temperature and high-pressure water is fed to a steam generator to generate steam by heat exchange, and the generated steam is fed to a turbine generator to generate electric power.

The containment of such a pressurized water reactor is built on solid ground such as bedrock, and the inside of the containment is divided by, for example, reinforced concrete into a plurality of compartments. The cylindrical concrete structure that forms the compartments supports a reactor vessel hanging into the central portion of the concrete structure, and a cavity is formed below the reactor vessel. In this nuclear reactor, a predetermined number of fuel assemblies in which a plurality of fuel rods are arranged in a lattice form with a predetermined number of control rods inserted therebetween are stored in the reactor vessel.

In the above-configured nuclear power plant, if a loss of coolant accident (LOCA) or a transient occurs, an emergency core cooling system is activated to cool the reactor core the reactor vessel so the heat generated is sufficiently removed. However, if the emergency core cooling system breaks down, the reactor core cannot be cooled. Therefore, the reactor core inside the reactor vessel and the corium such as molten fuel breaches the reactor vessel, penetrates its lower portion, and falls into the cavity. Generally, in case of such an accident, i.e., the outflow of the core corium from the reactor vessel, the flowing corium is received by the cavity and cooled by cooling water so that safety is ensured,

Examples of such a technology include the technology described in Patent Literature 1. The device for catching a core corium from a reactor pressure vessel that is described in Patent Literature 1 facilitates the flow of the core corium from the reactor pressure vessel. More specifically, a pre-chamber is disposed below the reactor pressure vessel and connected to a core corium expansion chamber through a channel disposed on one side of the reactor pressure vessel.

### Citation List

### Patent Literature

Patent Literature 1: Japanese Patent No. 3537444

### Summary

### Technical Problem

In a conventional containment, it is assumed that the cavity is filled with water to cool a corium falling thereinto. Therefore, the cavity is designed so as to ensure a surface area sufficient for cooling. However, when a corium falls into the cavity filled with water, fine granular or clustered solid debris generated by interaction with the cooling water may not be sufficiently spread and may be accumulated in a pile, so that a surface area sufficient for cooling may not by ensured.

In the device for catching a core cerium from a reactor pressure vessel that is described in Patent Literature 1, the core cerium flowing out of the reactor pressure vessel is received by the pre-chamber. The received core corium, is allowed to flow from the pre-chamber to the expansion chamber through the channel and is then cooled in the expansion chamber by cooling water. Therefore, the bottom surfaces of the pre-chamber, channel, and expansion chamber must be formed of a material having sufficient heat resistance, and this results in an increase in cost.

The present invention solves the foregoing problems, and it is an object so provide a corium cooling promoting apparatus and a containment that can promote cooling of a corium failing from a nuclear reactor to complete the cooling at an early stage so that safety is improved.

### Solution to Problem

According to an aspect of the present invention, a corium cooling promoting apparatus includes an inclined member for spreading a cerium, which is disposed in a cavity that is provided below a nuclear reactor and to which cooling water can be supplied.

Advantageously, in the corium cooling promoting apparatus, the cavity has a horizontal hole shape extending from below the nuclear reactor in a horizontal direction, and the inclined member is inclined downward from below the nuclear reactor in the cavity toward a direction in which the cavity extends in the horizontal direction.

Advantageously, in the corium cooling promoting apparatus, the inclined member has a stepped shape.

Advantageously, in the corium cooling promoting apparatus, the cavity is formed by a concrete structure, and the inclined member is disposed above the concrete structure with a predetermined spacing therebetween.

Advantageously, in the corium cooling promoting apparatus, a downcomer space is provided on a side of the inclined member.

Advantageously, in the corium cooling promoting apparatus, the inclined member is formed from a porous material or a porous plate.

Advantageously, in the corium cooling promoting apparatus, the inclined member has an upper surface having a concave-convex shape undulating in a direction orthogonal to an inclination direction.

Advantageously, in the corium cooling promoting apparatus, the cavity is formed by building the concrete structure on a liner forming a pressure boundary with an outside, and a cooling water pipe is disposed in the concrete structure.

According to another aspect of the present invention, a containment containing a nuclear reactor therein and including a cavity that is disposed below the nuclear reactor and to which cooling water can be supplied in an emergency, includes an inclined member for spreading a corium from the nuclear reactor, which is disposed in the cavity at a position below the nuclear reactor.

Advantageously, in the containment further includes a cooling water supplying unit for supplying the cooling water to the cavity before or after the corium from the nuclear reactor falls into the cavity.

### Advantageous Effects of Invention

In the corium cooling promoting apparatus of the present invention, a cavity to which cooling water can be supplied is disposed below the nuclear reactor and the inclined member for spreading a corium is disposed in the cavity. Therefore, when the nuclear reactor is damaged in an emergency and a corium falls into the cavity, the corium is received by the inclined member, flows along the incline member, and spreads thereover. Therefore, the cooling of the cerium falling from the nuclear reactor is facilitated, and the corium is thereby cooled at an early stage. In this manner, safety can be improved.

In the corium cooling promoting apparatus of the present invention, the cavity has a horizontal hole shape extending from below the nuclear reactor in a horizontal direction, and the inclined member is inclined downward from below the nuclear reactor in the cavity toward a direction in which the cavity extends in the horizontal direction. In this case, the corium falling from the nuclear reactor is received by the inclined member, flows along the inclined member in the extending direction of the cavity, and spreads over the inclined member. Therefore, a large area for spreading the corium can be ensured.

In the corium cooling promoting apparatus of the present invention, the inclined member has a stepped shape. In this case, the inclined member may be formed as a layered stack of a plurality of plate members. Since the area of contact between the corium and the cooling water supplied to the cavity is increased, the cooling efficiency can be improved.

In the corium cooling promoting apparatus of the present invention, the cavity is formed by a concrete structure, and the inclined member is disposed above the concrete structure with a predetermined spacing therebetween. In this case, the corium received by the inclined member and spreading thereover can be cooled from above and below by the cooling water supplied to the cavity, and the cooling efficiency can thereby be improved.

In the corium cooling promoting apparatus of the present invention, a downcomer space is provided on a side of the inclined member. In this case, he cooling water supplied to the cavity is naturally circulated above and below the inclined member through the downcomer space, and the cooling efficiency can thereby be improved.

In the corium cooling promoting apparatus of the present invention, the incline member is formed from a porous material or a porous plate. In this case, the cooling water supplied to the cavity flows inside the inclined member, and therefore the area of contact between the corium and the cooling water supplied to the cavity is increased. The cooling efficiency can thereby be improved.

In the corium cooling promoting apparatus of the present invention, the inclined member has an upper surface having a concave-convex shape undulating in a direction orthogonal to the inclination direction. In this case, the corium falling onto the incline member flows along the concave-convex shape, and therefore the area of contact between the corium and the cooling water supplied to the cavity is increased. The cooling efficiency can thereby be improved.

In the corium cooling promoting apparatus of the present invention, the cavity is formed by building a concrete structure on a liner forming a pressure boundary with the outside, and a cooling water pipe is disposed in the concrete structure. In this case, when the inclined member and the concrete structure are eroded by the corium, the cooling water pipe is broken, and the corium is cooled by the cooling water. Therefore, the breakage of the liner can be prevented, and the safety can be improved.

The containment of the present invention contains a nuclear reactor therein and includes a cavity that is disposed below the nuclear reactor and to which cooling water can be supplied in an emergency. The containment includes an inclined member disposed in the cavity at a position below the nuclear reactor, for spreading a corium from the nuclear reactor. Therefore, if the nuclear reactor melts and the corium falls into the cavity in an emergency, the corium is received by the inclined member, flows the inclined member, and spreads thereover. Therefore, the cooling of the cerium falling from the nuclear reactor is facilitated, and the corium is cooled at an early stage. The safety can thereby be improved.

The containment of the present invention further includes cooling water supplying means for supplying the cooling water to the cavity before or after the corium from the nuclear reactor falls into the cavity. In this case, the corium falling from the nuclear reactor onto the inclined member in the cavity can be appropriately cooled by the cooling water.

### Brief Description of Drawings

FIG. 1 is a diagram illustrating the schematic structure of a corium cooling promoting apparatus applied to a containment according to a first embodiment of the present invention.
FIG. 2 is a schematic plan view of the corium cooling promoting apparatus of the first embodiment.
FIG. 3 is a diagram illustrating the schematic structure of a nuclear power plant to which the containment of the first embodiment is applied.
FIG. 4 is a schematic diagram illustrating the reactor structure of a pressurized water reactor.
FIG. 5 is a diagram illustrating the schematic structure of the containment of the first embodiment.
FIG. 6 is a diagram illustrating the schematic structure of a corium cooling promoting apparatus applied to a containment according to a second embodiment of the present invention.
FIG. 7 is a schematic plan view of the corium cooling promoting apparatus of the second embodiment.
FIG. 8 is a diagram illustrating the schematic structure of a corium cooling promoting apparatus applied to a containment according to a third embodiment of the present invention.
FIG. 9 is a diagram illustrating the schematic structure of a corium cooling promoting apparatus applied to a containment according to a fourth embodiment of the present invention.
FIG. 10 is a diagram illustrating the schematic structure of a cerium cooling promoting apparatus applied to a containment according to a fifth embodiment of the present invention.
FIG. 11 is a schematic side view of the corium cooling promoting apparatus of the fifth embodiment.
FIG. 12 is a diagram illustrating the schematic structure of a containment according to a sixth embodiment of the present invention.
FIG. 13 is a diagram illustrating the schematic structure of a corium, cooling promoting apparatus applied to the containment of the sixth embodiment.

### Description of Embodiments

Preferred embodiments of a corium cooling promoting apparatus and a containment according to the present invention will next be described in detail with reference to the accompanying drawings. However, the present invention is not limited to these embodiments,

### [First Embodiment]

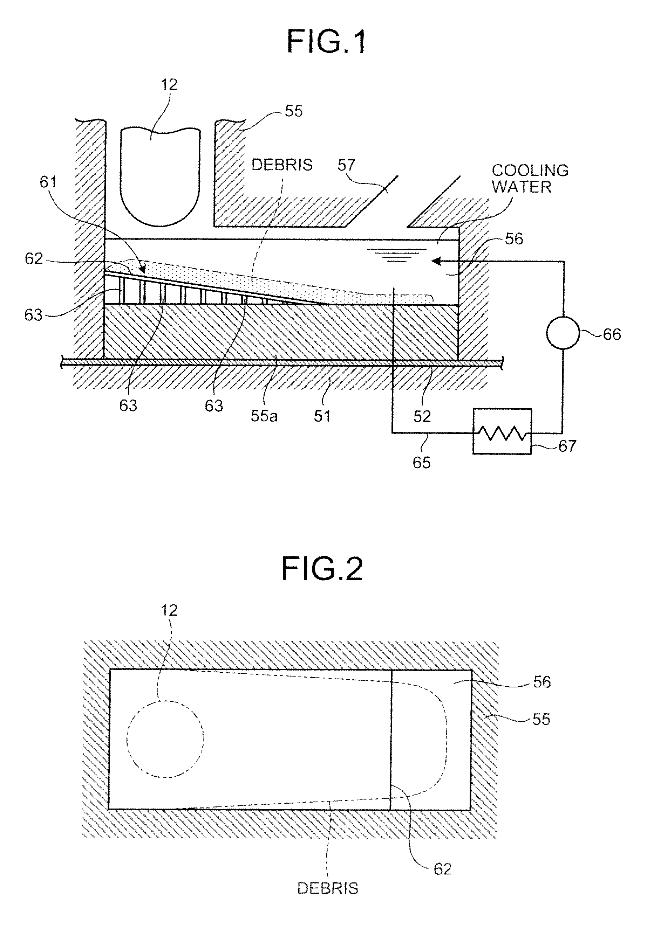

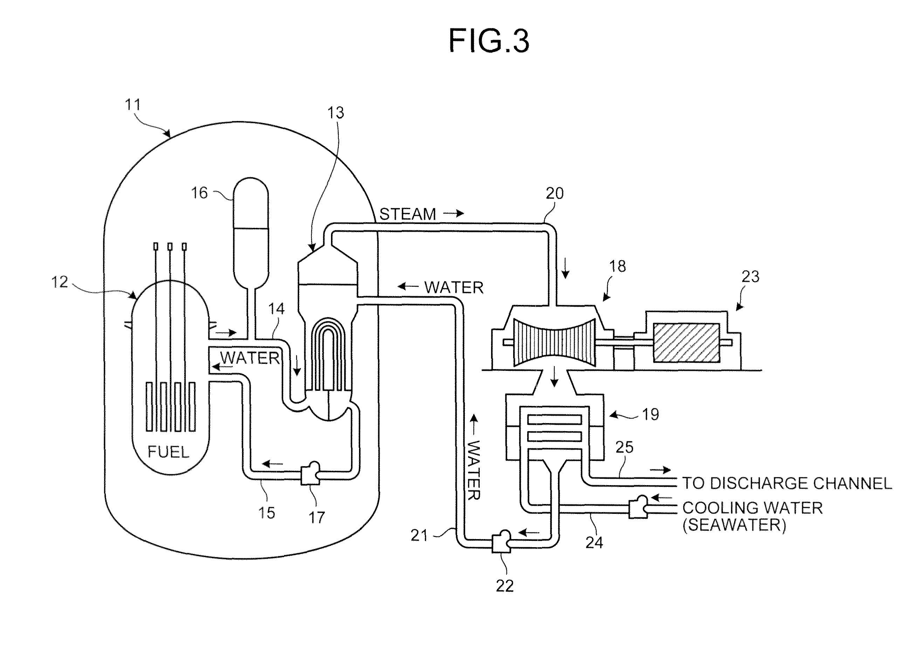

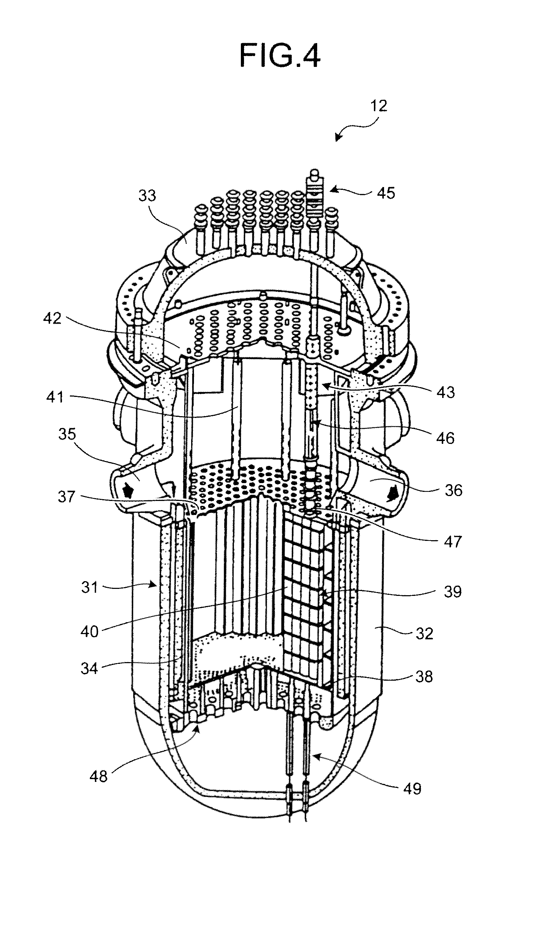

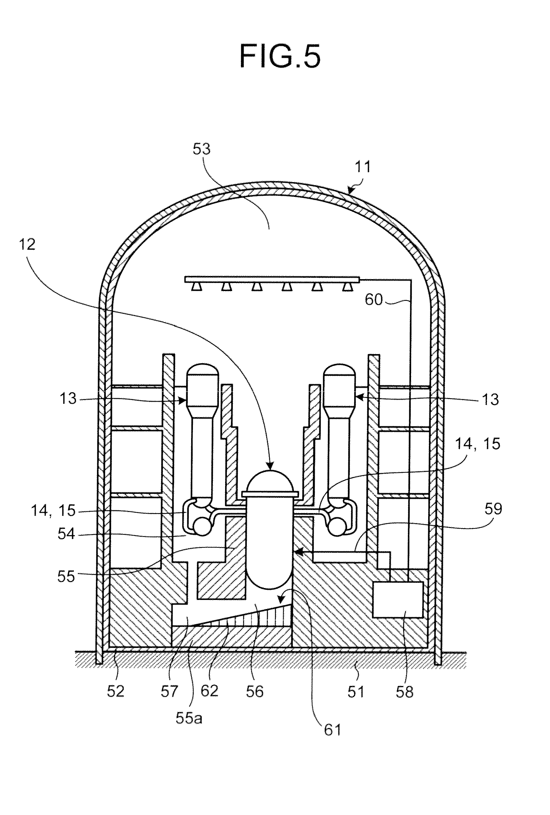

FIG. 1 is a diagram illustrating the schematic structure of a corium cooling promoting apparatus applied to a containment according to a first embodiment of the present invention. FIG. 2 is a schematic plan view of the corium cooling promoting apparatus of the first embodiment. FIG. 3 is a diagram illustrating the schematic structure of a nuclear power plant to which the containment of the first embodiment is applied. FIG. 4 is a schematic diagram illustrating the reactor structure of a pressurized water reactor. FIG. 5 is a diagram illustrating the schematic structure of the containment of the first embodiment.

The nuclear reactor applied to the nuclear power plant of the first embodiment is a pressurized water reactor (PWR) in which light water is used as a reactor coolant and a neutron moderator and circulates as high-temperature and high-pressure water that does not boil throughout an entire primary system. In the pressurized water reactor, the high-temperature and high-pressure water is fed to a steam generator to generate steam by heat exchange, and the generated steam is fed to a turbine generator to generate electric power.

More specifically, as shown in FIG. 3, in the nuclear power plant including the pressurized water reactor, a pressurized water reactor 12 and a steam generator 13 are contained in a containment 11, and the pressurized water reactor 12 and the steam generator 13 are connected through cooling water pipes 14 and 15. A pressurizer 16 is provided to the cooling water pipe 14, and a cooling water pump 17 is provided to the cooling water pipe 15. In this configuration, light water is used as a moderator and primary cooling water. To suppress boiling of the primary cooling water in a reactor core portion, a primary cooling system is controlled by the pressurizer 16 such that a high-pressure state of about 160 atm is maintained. In the pressurized water reactor, 12, the light water used as the primary cooling water is heated by low-enriched uranium or MOX used as fuel, and the high-temperature primary cooling water with its pressure maintained at a predetermined high level by the pressurizer 16 is fed to the steam generator through the cooling water pipe 14. In the steam generator 13, heat is exchanged between the high-pressure and high-temperature primary cooling water and secondary cooling water, and the cooled primary cooling water is returned to the pressurized water reactor 12 through the cooling water pipe 15.

The steam generator 13 is connected to a turbine 18 and a condenser 19 disposed outside the containment 11 through cooling water pipes 20 and 21, and a feed pump 22 is provided to the cooling water pipe 21. A power generator 23 is connected to the turbine 18, and a water intake pipe 24 and a drain pipe 25 for supplying-discharging cooling water (e.g., seawater) are connected to the condenser 19. Therefore, the steam generated in the steam generator 13 by heat exchange with the high-pressure and high-temperature primary cooling water is fed to the turbine 18 through the cooling water pipe 20 and then drives the turbine 18, and power is generated by the generator 23. The steam that has driven the turbine 18 is cooled by the condenser 19 and then returned to the steam generator 13 through the cooling water pipe 21.

In the pressurized water reactor 12, the reactor vessel 31 is composed of a reactor vessel main body 32 and a reactor vessel lid 33 attached to the upper portion of the reactor vessel main body 32 so that core internals can be inserted into the reactor vessel 31, as shown in FIG. 4. The reactor vessel lid 33 is openable and closable with respect to the reactor vessel main body 32. The reactor vessel main body 32 has a cylindrical shape with an open upper portion and a doused lower portion. A heat shielding member 34 is secured to the inner surface of the reactor vessel main bods 32, and an inlet nozzle 35 and an outlet nuzzle 36 for supplying and discharging the primary cooling water are formed in the upper portion of the reactor vessel main body 32.

A reactor core 39 is formed in the reactor vessel main bods 32 and is sandwiched between upper and lower reactor core plates 37 and 38, and a large number of fuel assemblies 40 are inserted into the inside of the reactor core 39. An upper reactor core support plate 42 is secured to the upper portion of the upper reactor core plate 37 through columns 41, and a large number of control rod cluster guide tubes 43 are supported between the upper reactor core support plate 42 and the upper reactor core plate 37. A control rod driving unit 45 is supported on the reactor vessel lid 33. Respective control rod cluster driving shafts 46 pass through the control rod cluster guide tubes 43 and extend to the fuel assemblies 40, and a control rod cluster (control rods) 47 is attached to each control rod cluster driving shaft 46.

A lower reactor core support plate 48 is secured to the lower portion of the lower reactor core plate 38, and incore instrument guide tubes 49 are supported by the lower reactor core support plate 48. In this embodiment, the incore instrument guide tubes 49 are inserted from the lower portion of the reactor vessel 31. However, the incore instrument guide tubes 49 may be inserted from the upper portion of the reactor vessel 31.

Nuclear fission in the reactor core 39 is controlled by moving the control rod clusters 47 using the control rod driving unit 45 to insert the not-shown control rods into the fuel assemblies 40. The primary cooling water filling the reactor vessel 31 is heated by the thermal energy generated, and the high-temperature primary cooling water is discharged from the outlet nozzle 36 and is fed to the steam generator 13, as described above. More specifically, uranium or plutonium used as the fuel constituting the fuel assemblies 40 undergoes fission, and neutrons are thereby emitted. The light water serving as the moderator and the primary cooling water reduces the kinetic energy of the emitted fast neutrons, and the fast neutrons are thereby converted to thermal neutrons, so that the subsequent nuclear fission is facilitated. The light water also removes the generated heat to cool the neutrons. The number of neutrons generated in the reactor core 39 is controlled by inserting the control rod clusters 47 into the fuel assemblies 40. When the nuclear reactor is shut down in an emergency, the control rod clusters 47 are rapidly inserted into the reactor core.

The containment 11 in the nuclear power plant described above is built on solid ground 51 such as bedrock through a steel plate liner 52 that forms a pressure boundary with the outside, as shown in FIG. 5. The inside of the containment 11 is divided by, for example, reinforced concrete into a plurality of compartments such as an upper compartment 53 and a steam generator loop chamber 54. A cylindrical concrete structure 55 that defines the steam generator loop chamber 54 is formed at the central portion of the containment 11. The concrete structure 55 supports the pressurized water reactor 12 (the reactor vessel 31) hanging thereinto, The steam generators 13 are disposed in the steam generator loop chamber 54, and the cooling water pipes 14 and 15 are connected to the steam generators 13.

A cavity 56 surrounded by the concrete structure 55 is formed inside the containment 11 at a position below the reactor vessel 31. The cavity 56 is in communication with the steam generator loop chamber 54 through a drain line 57. A refueling water storage pit 58 is provided to the containment 11. The containment 11 further includes: a reactor cooling channel (cooling water supplying means) 59 for supplying cooling water in the refueling water storage pit 58 to the pressurized water reactor 12 in an emergency to cool the pressurized water reactor 12; and a containment cooling channel (cooling water supplying means) 60 for spraying the cooling water into the containment 11 to cool it. The cooling water sprayed into the containment 11 is accumulated in the cavity 56 through the steam generator loop chamber 54 and the drain line 57.

Although not shown in the figures, an external injection channel for fire-extinguishing water etc. that supplies cooling water to the cavity 56 is provided to the containment 11. The base end of the external injection channel is connected to an external supply facility for fire-extinguishing water etc. that is disposed outside the containment 11, and the other end is in communication with the cavity 56.

In the containment 11 configured as described above in the present embodiment, the cavity 56 to which cooling water can be supplied is disposed below the pressurized water reactor 12, and a cooling promoting apparatus 61 for receiving a corium falling from the pressurized water reactor 12 and promoting cooling with cooling water in an emergency is provided to the cavity 56.

If a loss of coolant accident (LOCA), for example, occurs in the nuclear power plant, an emergency core cooling system is activated, and cooling water is supplied to a reactor cooling facility including the pressurized water reactor, 12 to cool the reactor core and remove the generated heat sufficiently. However, if this emergency core cooling system breaks down, the reactor core cannot be cooled. Then the reactor core inside the reactor vessel melts, and the cerium such as the molten fuel breaches the reactor vessel, penetrates its lower portion, and falls into the cavity 56. In such a case, since cooling water can be supplied to the cavity 56, the corium falling into the cavity 56 is cooled by the cooling water. The corium, failing into the cavity is finely granulated or solidified into clusters by the interaction with the cooling water. However, if the solidified debris is accumulated in a pile, it is difficult to sufficiently cool, particularly, the inside of the piled debris.

The cooling promoting apparatus 61 of the present embodiment receives the cerium falling from the pressurized water reactor 12 and allows the corium to spread over a wide area, and the area of contact between the cerium and the cooling water is thereby increased to promote cooling of the cerium by the cooling water.

In this cooling promoting apparatus 61, the cavity 56 is formed below the pressurized water reactor 12 by the concrete structure 55 as shown in FIGs. 1 and 2. The cavity 56 has a horizontal hole shape extending from below the pressurized water reactor 12 in one horizontal direction. The base end portion of the cavity 56 is located bellow the pressurized water reactor 12, and the upper portion in the tail end portion of the cavity 56 is in communication with the steam generator loop chamber 54 through the drain line 57 (see FIG. 5).

In the cavity 56, protection concrete 55a is provided above the steel liner 52 to protect it, and an inclined plate 62 constituting part of the cooling promoting apparatus 61 and serving as an inclined member for spreading the corium is disposed on the horizontal upper surface of the protection concrete 55a. The inclined plate 62 is disposed so as to be inclined downward from below the reactor in the cavity 56 (from the base end of the cavity 56) toward a direction in which the cavity 56 extends in the horizontal direction (toward the tail end of the cavity 56).

The inclined plate 62 is supported in an inclined state by a large number of columns 63 on the upper surface of the protection concrete 55a and is therefore disposed with a predetermined spacing between the inclined plate 62 and the upper surface of the protection concrete 55a. The inclined plate 62 is formed from a porous material, so that the cooling water supplied to the cavity 56 can flow upward and downward through the inclined plate 62. Examples of the porous material that can be used for the inclined plate 62 include ceramic materials such as alumina, nonwoven fabric sintered bodies formed from base materials such as austenitic stainless steel sand Ni-based and Co-based superalloys, porous metal bodies such as sintered bodies obtained by sintering of metal particles and metal powders, porous metal bodies having a structure composed of stacked metal gauzes, and porous metal bodies having a honeycomb structure. A porous plate obtained by forming a large number of holes in a carbon steel or stainless steel plate may also be used.

A cooling water circulation channel 65 for circulating the accumulated cooling water is provided to the cavity 56, and a pump 66 and a heat exchanger 67 are provided in the cooling water circulation channel 65. Therefore, when a loss of coolant accident, for example, occurs in an emergency, the pump 66 is actuated to circulate the cooling water accumulated in the cavity 56 through the heat exchanger 67, and the cooling water accumulated in the cavity 56 can thereby be cooled.

When such an accident occurs, a not-shown pump is actuated to feed the cooling water accumulated in the refueling water storage pit 58 through the containment cooling channel 60, and the cooling water is sprayed into the containment 11 from a large number of injection nozzles, as shown in FIG. 5. The cooling water is sprayed into a large amount of steam generated in the containment 11 and therefore takes a large amount of energy to cool the inside of the containment 11. Then the cooling water increased in temperature falls inside the containment 11, passes through the steam generator loop chamber 54 and the drain line 57, and is accumulated in the cavity 56. In this manner, the energy emitted inside the containment 11 can be removed by the sprayed cooling water, and the soundness of the containment 11 can thereby be maintained.

When the accident occurs, a not-shown pump is also actuated to feed the cooling water accumulated in the refueling water storage pit 58 to the pressurized water reactor 12 through the reactor cooling channel 59. Then the cooling water takes the core decay heat generated from the reactor core in the pressurized water reactor 12. Part of the cooling water is converted to steam and emitted to the atmosphere in the containment 11, and the rest is converted to high-temperature water which flows to the outside, passes through the steam generator loop chamber 54 and the drain line 57, and is accumulated in the cavity 56.

If the emergency core cooling system described above breaks down, the cooling water cannot be fed to the pressurized water reactor 12 to cool it. Therefore, the reactor core inside the reactor vessel melts, and the corium breaches the reactor vessel and falls into the cavity 56.

In such a case, since the containment cooling channel 60 for feeding the cooling water accumulated in the refueling water storage pit 58 to the containment 11 and spraying the water thereinto is provided, the channel 60 can be connected to the reactor cooling channel 59. Therefore, even if the emergency core cooling system breaks down, the cooling water can be supplied to the containment 11 or the pressurized water reactor 12 through at least one of the channels 59 and 60, and this cooling water can be supplied to the cavity 56. Since the external injection channel for fire-extinguishing water etc. that directly supplies cooling water to the cavity 56 is provided to the containment 11, the cooling water can be supplied to the cavity 56 through the external injection channel. Therefore, even if the emergency core cooling system breaks down, the cavity 56 can be filled with the cooling water.

In the cooling promoting apparatus 61, the corium falling from the pressurized water reactor 12 falls onto the upper surface of the inclined plate 62, as shown in FIGs. 1 and 2. Fine granular debris is formed during failing by the interaction with the cooling water accumulated in the cavity 56 and falls onto the inclined plate 62, and a debris bed is thereby formed. The debris bed (which may be a corium or non-granulated clustered solids according to the status of the cavity 56) spreads while moving inside the cavity 56 toward its tail end because of the inclination of the inclined plate 62. In this case, since the inclined plate 62 is formed from a porous material (or a porous plate), the cooling water supplied to the cavity 56 penetrates through the inclined plate 62 and flows upward and downward. Therefore, the heat of the debris moving on the inclined plate 62 is removed from the upper and lower surfaces of the debris while it spreads over the inclined plate 62.

As described above, in the first embodiment, the pressurized water reactor 12 is contained inside the containment 11, and the cavity 56 to which cooling water can be supplied in an emergency is disposed below the pressurized water reactor 12. The cooling promoting apparatus 61 is disposed in the cavity 56, and the inclined plate 62 for spreading a corium (debris) from the pressurized water reactor 12 is provided, as the cooling promoting apparatus 61, at a position below the pressurized water reactor 12 in the cavity 56.

Therefore, in a case where an emergency occurs in the nuclear power plant, even if the pressurized water reactor 12 is damaged and a corium falls into the cavity 56, the corium is received by the inclined prate 62, flows along the inclined plate 62, and spreads thereover. Therefore, the cooling of the corium falling from the pressurized water reactor 12 by the cooling water is facilitated, and the corium is cooled at an early stage. In this manner, the safety of the nuclear power plant can be improved.

In the cooling promoting apparatus 61 of the first embodiment, the cavity 56 has a horizontal hole shape extending from below the pressurized water reactor 12 in the horizontal direction, and the inclined plate 62 is inclined downward from below the pressurized water reactor 12 in the cavity 56 in a direction in which the cavity 56 extends in the horizontal direction. Therefore, the corium failing from the pressurized water reactor 12 is received by the inclined plate 62, flows along the inclined plate 62 in the extending direction of the cavity 56, and thereby spreads over the inclined plate 62, so that a large spreading area for the corium (debris) can be ensured.

In the cooling promoting apparatus 61 of the first embodiment, the cavity 56 is formed by the concrete structure 55, and the inclined plate 62 is disposed above the protection concrete 55a with a predetermined spacing therebetween. Therefore, the corium received by the inclined plate 62 and spreading thereover can be cooled from above and below by the cooling water supplied to the cavity 56, and the cooling efficiency can thereby be improved.

In the cooling promoting apparatus 61 of the first embodiment, the inclined plate 62 is formed from a porous material or a porous plate. Therefore, the cooling water supplied to the cavity 56 flows through the inclined plate 62, and the corium on the inclined plate 62 is cooled from above and below. The area of contact between the corium and the cooling water is increased, and the cooling efficiency can be improved.

In the first embodiment, the containment cooling channel 60 for feeding the cooling water accumulated in the refueling water storage pit 58 to the containment 11 and spraying the cooling water thereinto and the reactor cooling channel 59 for feeding the cooling water to the pressurized water reactor 12 are provided. In addition, the external injection channel for fire-extinguishing water etc. that directly supplies cooling water to the cavity 56 from the outside of the containment 11 is provided. Therefore, even if the emergency core cooling system breaks down, the cooling water can be supplied to the cavity through any of the above channels, and the corium on the inclined plate 62 can be properly cooled by the cooling water.

### [Second Embodiment]

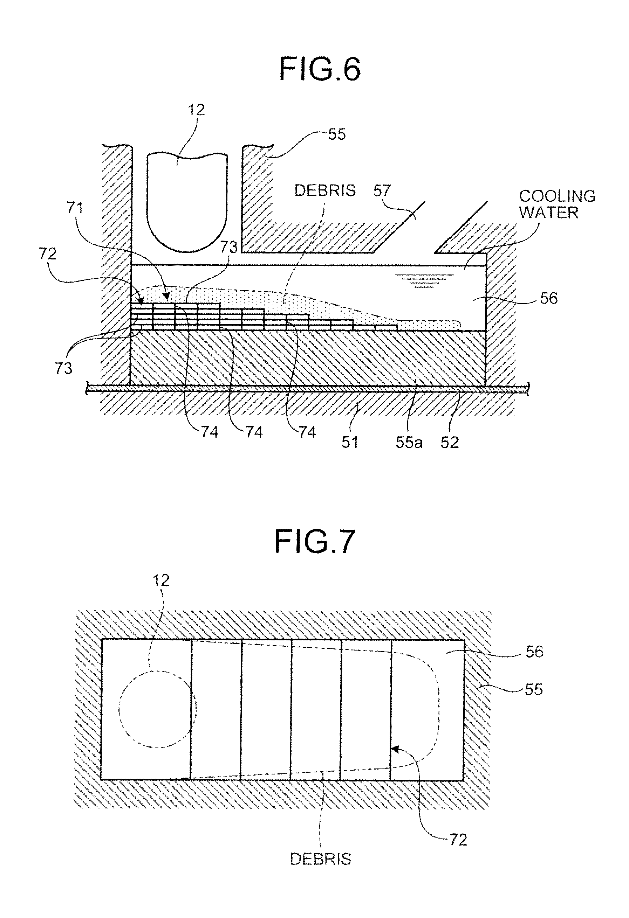

FIG. 6 is a diagram illustrating the schematic structure of a corium cooling promoting apparatus applied to a containment according to a second embodiment of the present invention, and FIG. 7 is a schematic plan view of the corium cooling promoting apparatus of the second embodiment. Components having the same functions as those described in the preceding embodiment are denoted by the same reference numerals, and a redundant description will be omitted.

In the second embodiment, a cavity 56 to which cooling water can be supplied is disposed below the pressurized water reactor 12, and a cooling promoting apparatus 71 for receiving a corium falling from the pressurized water reactor 12 and promoting cooling with cooling water in an emergency is provided to the cavity 56, as shown in FIGs. 6 and 7.

The cooling promoting apparatus 71 includes an inclined layer 72 having a stepped shape that is disposed in the cavity 56 on the horizontal upper surface of the protection concrete 55a. The inclined layer 72 is composed of a plurality of horizontal plate members 73 supported by a large number of columns 74 on the protection concrete 55a and layered with predetermined spacings below and above each plate member 73. The extending length of the stacked plate members 73 from the base end of the cavity 56 toward its tail end decreases from bottom to top. Therefore, the inclined layer 72 is disposed so as to be inclined downward in a stepwise manner from below the reactor in the cavity 56 (from the base end of the cavity 56) toward a direction in which the cavity 56 extends in the horizontal direction (toward the tail end of the cavity 56). The plate members 73 are formed from a porous material (or a porous plate).

If the emergency core cooling system breaks down, the reactor core inside the reactor vessel melts, and the corium breaches the reactor vessel and falls into the cavity 56. In such a case, the cooling water accumulated in the refueling water storage pit 58 is fed to the containment 11 through the containment cooling channel 60. Alternatively, fire-extinguishing water, for example, is supplied to the cavity 56 through the external injection channel. Therefore, even if the emergency core cooling system breaks down, the cavity 56 is filled with cooling water.

In the cooling promoting apparatus 71, the corium falling from the pressurized water reactor 12 falls onto the upper surface of the inclined layer 72. Then the corium falling onto the inclined layer 72 is converted to granular debris because of the interaction with the cooling water accumulated in the cavity 56. The debris (corium) spreads while moving inside the cavity 56 toward its tail end because of the inclination of the inclined layer 72. In this case, since the inclined layer 72 is formed from a porous material, the cooling water supplied to the cavity 56 penetrates through the inclined layer 72 and flows upward and downward. Therefore, the heat of the debris moving on the inclined layer 72 is removed from the upper and lower surfaces of the debris while the debris spreads over the inclined layer 72.

As described above, in the second embodiment, the cooling promoting apparatus 71 is disposed in the cavity 56, and the inclined layer 72 for spreading the corium (debris) from the pressurized water reactor 12 is provided, as the cooling promoting apparatus 71, at a position below the pressurized water reactor 12 in the cavity 56.

Therefore, in a case where an emergency occurs in the nuclear power plant, even if the pressurized water reactor 12 is damaged and a corium falls into the cavity 56, the corium is received by the inclined layer 72, flows along the inclined layer 72, and spreads thereover. Therefore, the cooling of the corium failing from the pressurized water reactor 12 by the cooling water is facilitated, and the corium is cooled at an early stage. In this manner, the safety of the nuclear power plant can be improved.

In the cooling promoting apparatus 71 of the second embodiment, the inclined layer 72 has a stepped shape. The inclined layer 72 can be formed from a plurality of layered plate members 73, and the area of contact between the corium and the cooling water supplied to the cavity 56 can be increased, so that the cooling efficiency can be improved.

### [Third Embodiment]

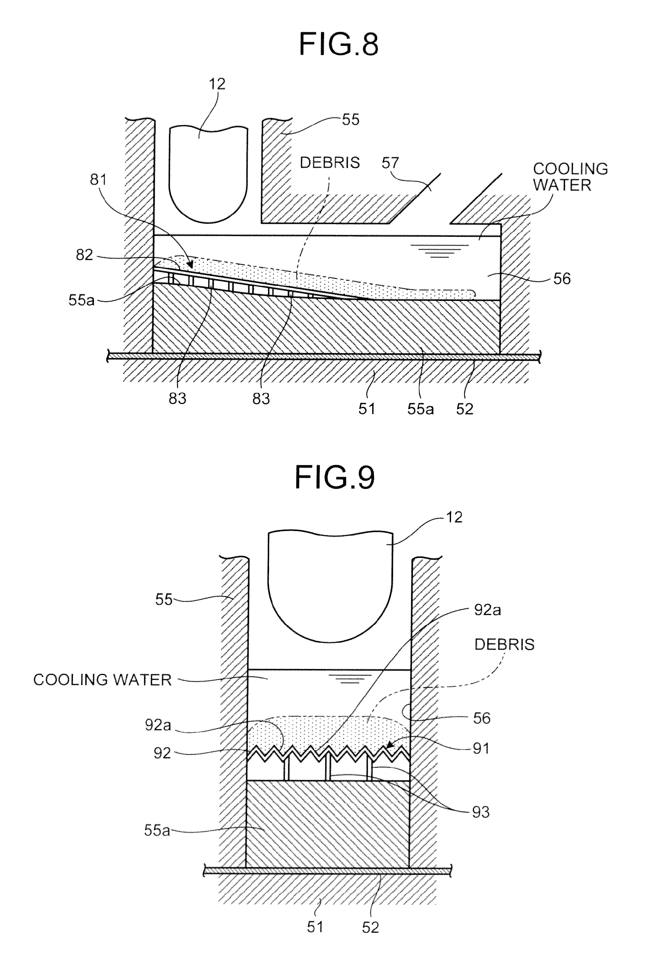

FIG. 8 is a diagram illustrating the schematic structure of a corium cooling promoting apparatus applied to a containment according to a third embodiment of the present invention. Components having the same functions as those described in the preceding embodiments are denoted by the same reference numerals, and a redundant description will be omitted.

In the third embodiment, a cavity 56 to which cooling water can be supplied its disposed below the pressurized water reactor 12, and a cooling promoting apparatus 81 for receiving a corium falling from the pressurized water reactor 12 and promoting cooling with cooling water in an emergency is provided to the cavity 56, as shown in FIG. 8.

An inclined surface 55 being inclined downward from below the reactor in the cavity 56 (from the base end of the cavity 56) toward a direction in which the cavity 56 extends in the horizontal direction (toward the tail end of the cavity 56) is formed on the protection concrete 55a. The cooling promoting apparatus 81 includes an inclined prate 82 that is disposed inside the cavity 56 along the inclined surface 55b of the protection concrete 55a and used as an inclined member for spreading a corium. The inclined plate 82 is supported by a large number of columns 83 on the inclined surface 55b with predetermined spacings above and below the inclined plate 82 and is disposed so as to be inclined downward from below the reactor in the cavity 56 (from the base end of the cavity 56) toward a direction in which the cavity 56 extends in the horizontal direction (toward the tail end of the cavity 56). The inclined plate 82 is formed from a porous material (or a porous plate).

If the emergency core cooling system breaks down, the reactor core inside the reactor vessel melts, and the corium breaches the reactor vessel and falls into the cavity 56. In such a case, cooling water is supplied to the cavity 56, and the cavity 56 is filled with the cooling water.

In the cooling promoting apparatus 81, the corium failing from the pressurized water reactor 12 falls onto the upper surface of the inclined plate 82. Then the corium falling onto the inclined layer 82 is converted to granular debris because of the interaction with the cooling water accumulated in the cavity 56. The debris (corium) spreads while moving inside the cavity 56 toward its tail end because of the inclination of the inclined plate 82. In this case, since the inclined plate 82 is formed from a porous material, the cooling water supplied to the cavity 56 penetrates through the inclined plate 82 and flows upward and downward, and the heat of the debris moving on the inclined plate 82 is removed from the upper and lower surfaces of the debris while it spreads over the inclined plate 82.

As described above, in the third embodiment, the cooling promoting apparatus 81 is disposed in the cavity 56, and the inclined plate 82 for spreading the corium (debris) from the pressurized water reactor 12 is provided, as the cooling promoting apparatus 81, at a position below the pressurized water reactor 12 in the cavity 56 and is located above the inclined surface 55b of the protection concrete 55a.

Therefore, in a case where an emergency occurs in the nuclear power plant, even if the pressurized water reactor 12 is damaged and a corium falls into the cavity 56, the corium is received by the inclined plate 82, flows along the inclined prate 82, and spreads thereover. Therefore, the cooling of the corium falling from the pressurized water reactor 12 by the cooling water is facilitated, and the corium is cooled at an early stage. In this manner, the safety of the nuclear power plant can be improved. In addition, the inclined surface 55b is formed on the protection concrete 55a in advance, and a plate serving as the inclined plate 82 is disposed above the inclined surface 55b. In this manner, the structure can be simplified.

### [Fourth Embodiment]

FIG. 9 is a diagram illustrating the schematic structure of a corium cooling promoting apparatus applied to a containment according to a fourth embodiment of the present invention. Components having the same functions as those described in the preceding embodiments are denoted by the same reference numerals, and a redundant description will be omitted.

In the fourth embodiment, a cavity 56 to which cooling water can be supplied is disposed below the pressurized water reactor 12, and a cooling promoting apparatus 91 for receiving a corium failing from the pressurized water reactor 12 and promoting cooling with cooling water in an emergency is provided to the cavity 56, as shown in FIG. 9.

The cooling promoting apparatus 91 includes an inclined plate 92 that is disposed in the cavity 56 above the protection concrete 55a and serves as an inclined member for spreading a corium. The inclined plate 92 is supported by a large number of columns 93 on the protection concrete 55a with predetermined spacings above and below the inclined plate 92 and is disposed so as to be inclined downward from below the reactor in the cavity 56 (from the base end of the cavity 56) toward a direction in which the cavity 56 extends in the horizontal direction (toward the tail end of the cavity 56). The inclined plate 92 has an upper surface having a concave-convex shape undulating in a direction orthogonal to an inclination direction. More specifically, the inclined plate 92 is formed by bending a plate material into a zigzag shape to form a plurality of grooves 92a that extend along the upper and lower surfaces in the inclination direction and are arranged in a direction orthogonal to the inclination direction. The inclined plate 92 is formed from a porous material (or a porous plate).

If the emergency core cooling system breaks down, the reactor core inside the reactor vessel melts, and the corium breaches the reactor vessel and falls into the cavity 56. In such a case, cooling water is supplied to the cavity 56, and the cavity 56 is filled with the cooling water.

In the cooling promoting apparatus 91, the corium failing from the pressurized water reactor 12 falls onto the upper surface of the inclined plate 92. Then the corium failing onto the inclined plate 92 is converted to granular debris because of the interaction with the cooling water accumulated in the cavity 56. The debris (corium) spreads while being guided by the respective grooves 92a and moving in the cavity 56 toward its tail end because of the indignation of the inclined prate 92. In this case, since the inclined plate 92 is formed from a porous material, the cooling water supplied to the cavity 56 penetrates through the inclined plate 92 and flows upward and downward, and the heat of the debris moving on the inclined plate 92 is removed from the upper and lower surfaces of the debris while it spreads over the inclined plate 92.

As described above, in the fourth embodiment, the cooling promoting apparatus 91 is disposed in the cavity 56, and the inclined plate 92 for spreading the corium (debris) from the pressurized water reactor 12 is provided, as the cooling promoting apparatus 81, at a position below the pressurized water reactor 12 in the cavity 56. The upper surface of the inclined plate 92 has a concave-convex shape undulating in a direction orthogonal to the inclination direction.

Therefore, in a case where an emergency occurs in the nuclear power plant, even if the pressurized water reactor 12 is damaged and a corium falls into the cavity 56, the corium is received by the inclined plate 92, flows along the inclined plate 92, and spreads thereover. Therefore, the cooling of the corium falling from the pressurized water reactor 12 by the cooling water is facilitated, and the corium is cooled at an early stage. In this manner, the safety of the nuclear power plant can be improved. In addition, the inclined plate 92 has an upper surface having a concave-convex shape undulating in the direction orthogonal to the inclination direction, and the corium (debris) spreads the respective grooves 92a. Therefore, the spreading can be facilitated, and the area of contact between the corium and the cooling water can be increased, so that the cooling efficiency can be improved.

### [Fifth Embodiment]

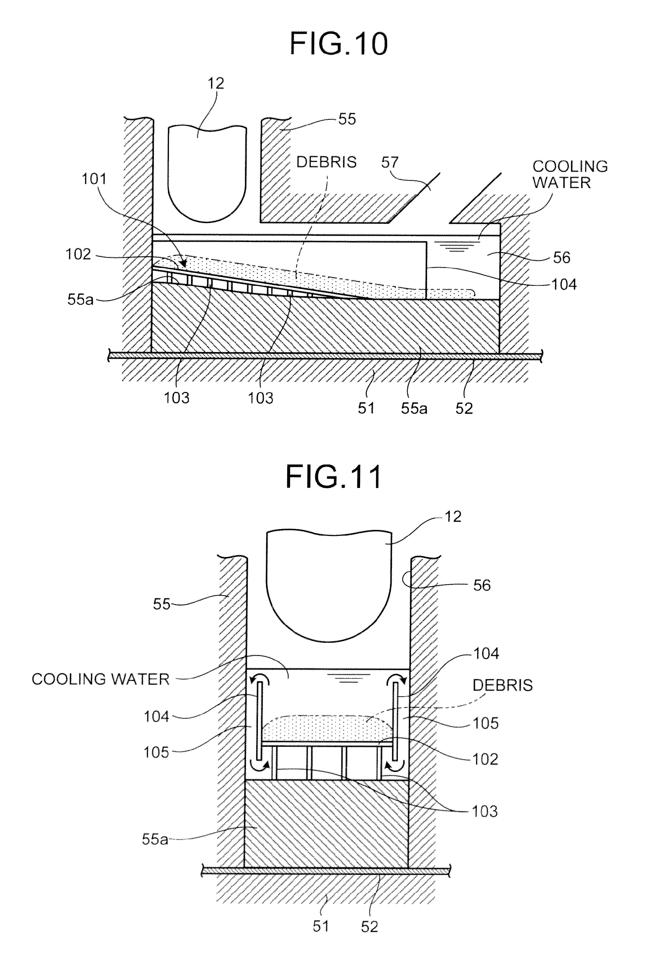

FIG. 10 is a diagram illustrating the schematic structure of a corium cooling promoting apparatus applied to a containment according to a fifth embodiment of the present invention, and FIG. 11 is a schematic side view of the corium cooling promoting apparatus of the fifth embodiment. Components having the same functions as those described in the preceding embodiments are denoted by the same reference numerals, and a redundant description will be omitted.

In the fifth embodiment, a cavity 56 to which cooling water can be supplied its disposed below the pressurized water reactor 12, and a cooling promoting apparatus 101 for receiving a corium falling from the pressurized water reactor 12 and promoting cooling with cooling water in an emergency is provided to the cavity 56, as shown in FIGs. 10 and 11.

The cooling promoting apparatus 101 includes an inclined plate 102 used as an inclined member for spreading a corium and disposed inside the cavity 56 on the horizontal upper surface of the protection concrete 55a. The inclined plate 102 is disposed so as to be inclined downward from below the reactor in the cavity 56 (from the base end of the cavity 56) toward a direction in which the cavity 56 extends in the horizontal direction (toward the tail end of the cavity 56).

The inclined plate 102 is supported by a large number of columns 103 on the upper surface of the protection concrete 55a in an inclined manner and is thereby disposed with a predetermined spacing between the inclined plate 102 and the upper surface of the protection concrete 55a. The width of the inclined plate 102 in a width direction orthogonal to the inclination direction is smaller than the width of the cavity 56. Partition walls 104 are secured to the widthwise ends of the inclined plate 102, and therefore downcomer spaces 105 are provided between each of the partition walls 104 and the corresponding one of the side walls of the cavity 56. The inclined plate 102 is formed from a porous material (or a porous plate).

If the emergency core cooling system breaks down, the reactor core inside the reactor vessel melts, and the corium breaches the reactor vessel and falls into the cavity 56. In such a case, the cooling water is supplied to the cavity 56, and the cavity 56 is filled with the cooling water.

In the cooling promoting apparatus 101, the corium falling from the pressurized water reactor 12 falls onto the upper surface of the inclined plate 102. Then the corium falling onto the inclined plate 102 is converted to granular debris because oaf the interaction with the cooling water accumulated in the cavity 56. The debris (corium) spreads while moving inside the cavity 56 toward its tail end because of the inclination of the inclined plate 102, In this case, since the inclined plate 102 is formed from a porous material, the cooling water supplied to the cavity 56 penetrates through the inclined plate 102 and flows upward and downward, and the heat of the debris moving on the inclined plate 102 is removed from the upper and lower surfaces of the debris while it spreads over the inclined plate 102. The cooling water above the corium on the inclined plate 102 comes to a boil and moves upward. Then the high-temperature cooling water flows over the respective partition walls 104, enters the respective downcomer spaces 105, flows downward through the downcomer spaces 105, and reaches the inclined plate 102. More specifically, the cooling water above and below the inclined plate 102 circulates in the cavity 56 through the downcomer spaces 105, so that the debris on the inclined plate 102 can be efficiently cooled.

As described above, in the fifth embodiment, the cooling promoting apparatus 101 is disposed in the cavity 56, and the inclined plate 102 for spreading the corium (debris) from the pressurized water reactor 12 is provided, as the cooling promoting apparatus 101, at a position below the pressurized water reactor 12 in the cavity 56 and is located above the inclined surface 55b of the protection concrete 55a. In addition, the partition walls 104 are secured to opposite ends of the inclined plate 102 to provide the downcomer spaces 105 between each of the partition walls 104 and the corresponding one of the side walls of the cavity 56.

Therefore, in a case where an emergency occurs in the nuclear power plant, even if the pressurized water reactor 12 is damaged and a corium falls into the cavity 56, the corium is received by the inclined plate 102, flows along the inclined plate 102, and spreads thereover. Therefore, the cooling of the corium falling from the pressurized water reactor 12 by the cooling water is facilitated, and the corium is cooled at an early stage. In this manner, the safety of the nuclear power plant can be improved. In addition, the downcomer spaces 105 are provided on opposite sides of the inclined plate 102. In this manner, the cooling water supplied to the cavity 56 naturally circulates above and below the inclined plate 102 through the downcomer spaces 105, so that the cooling efficiency can be improved.

### [Sixth Embodiment]

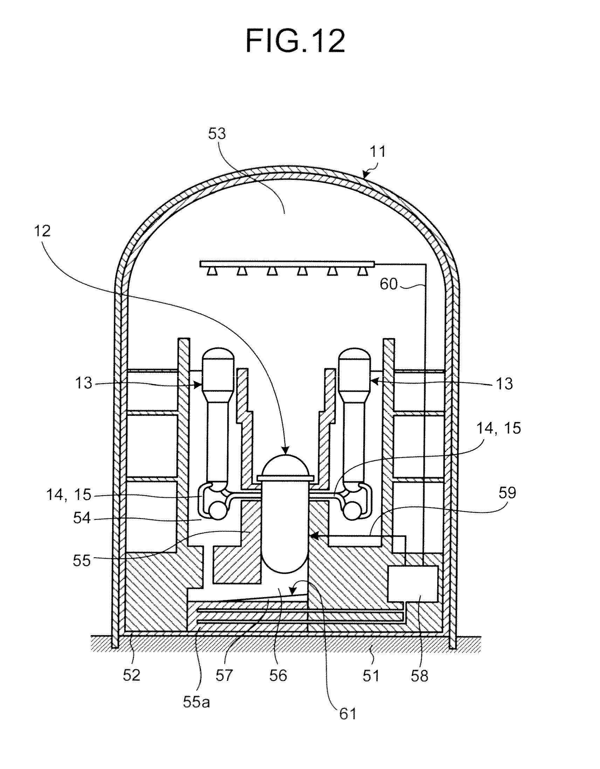

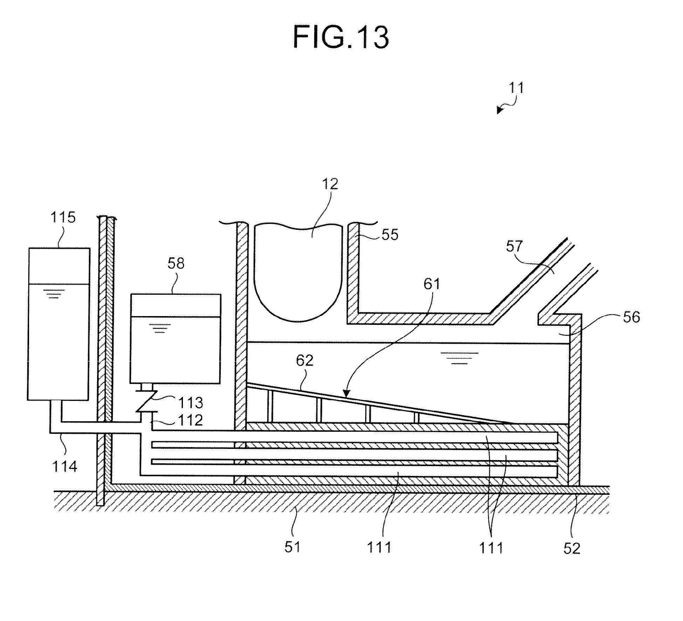

FIG. 12 is a diagram illustrating the schematic structure of a containment according to a sixth embodiment of the present invention, and FIG. 13 is a diagram illustrating the schematic structure of a corium cooling promoting apparatus applied to the containment of the sixth embodiment. Components having the same functions as those described in the preceding embodiments are denoted by the same reference numerals, and a redundant description will be omitted.

In the sixth embodiment, a concrete structure 55 in the containment 11 is built on the ground 51 through a steel plate liner 52. The pressurized water reactor 12 is supported by the concrete structure 55, and a cavity 56 is formed below the pressurized water reactor 12, as shown in FIGs. 12 and 13. A cooling promoting apparatus 61 is disposed in the cavity 56. A plurality of cooling water pipes 111 are embedded in the protection concrete 55a below the cavity 56. The plurality of cooling water pipes 111 are arranged parallel to each other in horizontal and vertical directions along the cavity 56. The base portions of a predetermined number of cooling water pipes 111 merge together and are connected to the refueling water storage pit 58, and the tail ends of the cooling water pipes 111 are closed. Part of or all the tail ends of the plurality of cooling water pipes 111 may merge together.

In this configuration, the base portions of the cooling water pipes 111 are connected to the refueling water storage pit 58 through a connection pipe 112 and a check valve 113 and are connected to a cooling water tank 115 disposed outside the containment 11 through a connection pipe 114. The refueling water storage pit 58 and the cooling water tank 115 are disposed at positions higher in the vertical direction than the cooling water pipes 111, and the cooling water accumulated in the refueling water storage pit 58 and the cooling water tank 115 fills the respective cooling water pipes 111 because of the self weight of the cooling water. Pumps may be attached to the respective pipes 112 and 114.

If the emergency core cooling system breaks down, the reactor core inside the reactor vessel melts, and the corium breaches the reactor vessel and falls into the cavity 56. In such a case, the cooling water is supplied to the cavity 56, and the cavity 56 is filled with the cooling water.

In the cooling promoting apparatus 61, the corium falling from the pressurized water reactor 12 falls onto the upper surface of the inclined plate 62 and spreads while moving inside the cavity 56 toward its tail end because of the inclination of the inclined plate 62. In this case, the cooling water supplied to the cavity 56 penetrates through the inclined plate 82 and flows upward and downward, and the heat of the debris moving on the inclined plate 82 is removed from the upper and lower surfaces of the debris while it spreads over the inclined plate 82.

If the cooling of the corium (debris) by the cooling water in the cavity 56 is insufficient, the debris erodes the inclined plate 62 and the protection concrete 55a. However, even the debris the protection concrete 55a, the cooling water pipes 111 embedded therein are broken, and the cooling water inside the cooling water pipes 111 blows out. The debris is thereby cooled, and the erosion of the steel plate liner 52 is prevented. In this the cooling water in the refueling water storage pit 58 or the cooling water tank 115 is successively fed to the cooling water pipes 111 because of the self weight of the cooling water, so that the debris can be reliably cooled.

As described above, in the sixth embodiment, the cooling promoting apparatus 61 is disposed in the cavity 56, and the cooling water pipes 111 are disposed in the protection concrete 55a below the cavity 56.

Therefore, in a case where an emergency occurs in the nuclear power plant, even if the pressurized water reactor 12 is damaged and a corium falls onto the inclined plate 62 in the cavity 56 and erodes the inclined plate 62 and the protection concrete 55a therebelow, the cooling water pipes 111 in the protection concrete 55a55 are broken, and the cooling water blows out to cool the cerium. Therefore, the breakage of the steel plate liner 52 can be prevented, and the safety can be improved.

In the respective embodiments described above, the cavity 56 has a horizontal hole shape extending in one horizontal direction from below the pressurized water reactor 12, but this shape is not a limitation. For example, the cavity 56 has a shape extending in opposite horizontal directions from below the pressurized water reactor 12.

In the respective embodiments described above, the inclined member its provided above the concrete structure with a predetermined spacing therebetween, However, the inclined member may be disposed directly on the upper surface of the concrete structure, or the concrete structure may have an inclined upper surface that serves as the inclined member, The inclined member is formed from a porous material or a porous plate so that the cooling water can be supplied below the inclined member. However, the inclined member may be formed from a material other than a porous material, and the cooling water may be actively supplied below the inclined surface through a pipe, a pump, etc.

In the description of the above respective embodiments, the corium cooling promoting apparatus and the containment of the present invention are applied to a pressurized water reactor. However, the present invention is applicable to a boiling water reactor (BWR) and is also applicable to any light water nuclear reactor.

### Industrial Applicability

In the cerium cooling promoting apparatus and the containment of the present invention, an inclined member for spreading a corium is provided to a cavity disposed below the reactor. In this manner, the cooling of the cerium falling from the reactor is facilitated, and the corium is cooled at an early stage so that the safety is improved. The present invention is applicable to any type of nuclear power plant.

### Reference Signs List

11 containment
12 pressurized water reactor
13 steam generator
52 steel plate liner
53 upper compartment
54 steam generator loop chamber
55 concrete structure
55a protection concrete
55b inclined surface
56 cavity
57 drain line
58 refueling water storage pit
59 reactor cooling channel (cooling water supplying means)
60 containment cooling channel (cooling water supplying means)
61,71,81,91,101 cooling promoting apparatus
62, 82, 92, 102 inclined plate (inclined member)
63 columns
72 inclined layer (inclined member)
104 partition wall
105 downcomer space
111 cooling water pipe

## Claims

1. A corium cooling promoting apparatus, comprising an inclined member for spreading a corium, which is disposed in a cavity that is provided below a nuclear reactor and to which cooling water can be supplied.

2. The corium cooling promoting apparatus according to claim 1, wherein the cavity has a horizontal hole shape extending from below the nuclear reactor in a horizontal direction, and the inclined member is inclined downward from below the nuclear reactor in the cavity toward a direction in which the cavity extends in the horizontal direction.

3. The corium cooling promoting apparatus according to claim 1 or 2, wherein the inclined member has a stepped shape.

4. The corium cooling promoting apparatus according to any one of claims 1 to 3, wherein the cavity is formed by a concrete structure, and the inclined member is disposed above the concrete structure with a predetermined spacing therebetween.

5. The corium cooling promoting apparatus according to claim 4, wherein a downcomer space is provided on a side of the inclined member.

6. The corium cooling promoting apparatus according to any one of claims 1 to 5, wherein the inclined member is formed from a porous material or a porous plate.

7. The corium cooling promoting apparatus according to any one of claims 1 to 6, wherein the inclined member has an upper surface having a concave-convex shape undulating in a direction orthogonal to an inclination direction.

8. The cerium cooling promoting apparatus according to any one of claims 1 to 7, wherein the cavity is formed by building the concrete structure on a liner forming a pressure boundary with an outside, and a cooling water pipe is disposed in the concrete structure,

9. A containment containing a nuclear reactor therein and including a cavity that is disposed below the nuclear reactor and to which cooling water can be supplied in an emergency,
the containment comprising an inclined member for spreading a corium from the nuclear reactor, which is disposed in the cavity at a position below the nuclear reactor.

10. The containment according to claim 9, further comprising a cooling water supplying unit for supplying the cooling water to the cavity before or after the corium, from the nuclear reactor falls into the cavity.
